# EUROPÄISCHE PATENTANMELDUNG

(11) **EP 1 231 019 A2**
(43) Veröffentlichungstag der Anmeldung: **14.08.2002**
(21) Anmeldenummer: 02405045.2
(22) Anmeldetag: 25.01.2002
(51) Int. Cl.: B23Q 11/00, B23B 51/00

(54) **Saugbohrer für die Bohrdübelmontage in Gestein**

(30) Priorität: 07.02.2001 DE 10105408
(71) Anmelder: HILTI Aktiengesellschaft, 9494 Schaan (LI)
(72) Erfinder: Bongers-Ambrosius, Hans-Werner, 81477 M-nchen (DE); Pröls, Tim, 80638 M-nchen (DE)
(74) Vertreter: Wildi, Roland

(57) **Zusammenfassung**

Ein Saugbohrer (1) für die Montage eines Bohrdübels (2) in Gestein, Beton, Mauerwerk und dgl. Materialien mit einem Einsteckende (3) zur Aufnahme in ein zumindest teilweise drehendes und schlagendes Handwerkzeuggerät, mit einem gestuft verjüngt abgesetzten Schaft (7) mit einer zumindest teilweise längs des Schaftes (7) verlaufenden, zu einem Bohrkopf (8) hin offenen, Saugöffnung (9) und einer damit verbundenen radialen Verbindungsöffnung (10) zur saugdichten Verbindung mit einem drehfreien Saugkopf (11), wobei der Bohrkopf (8) mit einer exzentrisch angeordneten Bohrkopfspitze (12) zum Bohren eines Bohrloches (14) mit einem Bohrlochdurchmesser (D) grösser als der Bohrkopfdurchmesser (B) ausgebildet ist.

## Beschreibung

Die Erfindung bezeichnet einen mit einem zumindest teilweise drehenden und schlagenden Handwerkzeuggerät beanspruchten Saugbohrer für die Montage eines Bohrdübels in Gestein oder gesteinsähnlichem Material wie Beton und Mauerwerk.

Bohrer für Handwerkzeuggeräte weisen zur Aufnahme in die Werkzeugaufnahme an einem Ende des Schaftes ein Einsteckende mit Drehmitnahmenuten und Verriegelungsnuten auf.

Zur Bohrdübelmontage wird ein, den Bohrer radial aussen umgebender und an einem umlaufenen Anschlagbund axial einseitig anschlagender, Bohrdübel gleichzeitig beim Bohren in das Bohrloch eingebracht und der, ein grösseres Bohrloch als der Bohrkopfdurchmesser bohrende, Bohrer anschliessend entfernt. Der üblicherweise längs geschlitzte, rohrförmige Bohrdübel aus Blech wird bei der Montage radial verengt und somit elastisch radial verspannt.

Nach der DE2548100 sind Saugbohrer für Gestein für Handwerkzeuggeräte ausgebildet.

Nach der US4635738 weist ein an einer Bohrstange befestigter, hartstoffbesetzter Bohrkopf eine exzentrisch angeordnete Bohrkopfspitze zum Bohren eines Loches grösser als der Bohrkopfdurchmesser sowie Spülflüssigkeitskanäle längs zum Bohrkopf auf.

Nach der US2953354 weist ein an einer Bohrstange befestigter, hartstoffbesetzter Bohrkopf eine konkave, exzentrisch angeordnete Bohrkopfspitze zum Bohren eines Loches grösser als der Bohrkopfdurchmesser auf, wobei eine Spülbohrung durch den Bohrkopf geführt wird und radiale und axiale Spülflüssigkeitskanäle ausgebildet sind.

Nach der EP0878261A1 weist ein Wendelbohrer zur Bohrdübelmontage ein Einsteckende mit Drehmitnahmenuten und Verriegelungsnuten, einen verjüngten wendelförmigen Schaft mit Anschlagbund und eine rückversetzte Hauptschneide mit einer exzentrisch angeordneten Pilotspitze aus eingesetztem Hartstoff zum Bohren eines Loches grösser als der Bohrkopfdurchmesser auf. Die beschränkte Fördermenge des am Bohrkopf abgetragenen Materials durch die sich zwischen dem Wendelbohrer und dem Bohrdübel ausbildende enge Wendelnut wirkt bei hohen Bohrleistungen begrenzend.

Die Aufgabe der Erfindung besteht in der Steigerung der Fördermenge des bei der Bohrdübelmontage abgetragenen Materials bzw. in einer Steigerung der Bohrleistung. Ein anderer Aspekt besteht in der Erhöhung der Lebensdauer des Bohrers sowie einer besseren Befestigung der Bohrdübel.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein Saugbohrer mit einem Einsteckende zur Aufnahme in ein zumindest teilweise drehendes und schlagendes Handwerkzeuggerät einen gestuft verjüngt abgesetzten Schaft mit einer zumindest teilweise längs des Schaftes verlaufenden Saugöffnung und einer damit verbundenen radialen Verbindungsöffnung zur saugdichten Verbindung mit einem drehfreien Saugkopf und einen Bohrkopf mit einer exzentrisch angeordneten Bohrkopfspitze zum Bohren eines Loches grösser als der Bohrkopfdurchmesser auf, wobei die Saugöffnung zum Bohrkopf hin offen ist.

Bei einem, gegenüber einem Wendelbohrer mit vergleichbarer Druck- und Torsionssteifigkeit ausgebildeten, rohrförmigen Saugbohrer steht bei gegebenem Bohrlochdurchmesser ein grösserer Förderquerschnitt zum Abtransport zur Verfügung, wobei die Fördermenge zusätzlich durch den Saugdruck und somit unabhängig von der Drehzahl einstellbar ist. Durch die, bei einem Rohr gegenüber einem Wendel als Schaft konstruktiv bedingten, Steigerungen der Steifigkeiten und Biegewechselfestigkeiten sowie durch die Vergrösserung der Befestigungsfläche zwischen dem Bohrkopf und dem Schaft wird die Lebensdauer des Bohrers erhöht. Andererseits sind bei gleicher Materialbeanspruchung des Bohrers dickwandigere und damit radial steifere Bohrdübel montierbar, wodurch die Befestigung verbessert sowie grössere Setztiefen bei verringerter Bohrdübellänge möglich sind, da kein Freiraum für Bohrmehl zur Verfügung stehen muss. Zudem wird beim Abtransport kein abgetragenes, loses Material zwischen den Bohrdübel und die Bohrlochwandung gepresst, wodurch die kraftreibschlüssige Befestigung des Bohrdübels im Bohrloch gesteigert wird.

Vorteilhaft tritt die Saugöffnung knapp hinter dem Bohrkopf quer zur Werkzeugachse aus dem verjüngt abgesetzten Schaft heraus.

Durch die im Schaft knapp hinter dem Bohrkopf angeordnete Saugöffnung kann das abgetragene Material zwischen dem Bohrkopf und dem Bohrdübel in einem axialen Freiraum abgesaugt werden, welcher zwischen der Bohrlochwandung und dem Schaft weiträumig ausgebildet ist.

Vorteilhaft ist der Bohrkopf vollständig aus Hartstoff oder mit eingesetztem Hartstoff ausgebildet, wodurch das Eindringen der Bohrkopfspitze in das abzubauende Material verbessert und der Verschleiss reduziert wird.

Vorteilhaft weist der Bohrkopf eine, weiter vorteilhaft eine einzelne, rückversetzte Hauptschneide auf, wodurch die als Pilotschneide wirksame exzentrische Bohrkopfspitze eine gute Führung des Saugbohrers ermöglicht.

Die Erfindung wird bezüglich eines vorteilhaften Ausführungsbeispiels näher erläutert mit einer Darstellung eines Saugbohrers für die Bohrdübelmontage.

Nach der Darstellung weist ein Saugbohrer 1 für die Montage eines Bohrdübels 2 in Gestein ein Einsteckende 3 mit einer Drehmitnahmenut 4 und einer Verriegelungsnut 5 auf. In einem, einen umlaufenden einseitig axialen Anschlagbund 6 ausbildenden, gestuft verjüngt abgesetzten Schaft 7 ist eine teilweise längs verlaufende, zu einem Bohrkopf 8 hin offene, entgegen der Bohrerrichtung knapp hinter dem Bohrkopf 8 heraustretende, Saugöffnung 9 und eine damit verbundene radiale Verbindungsöffnung 10 zur saugdichten Verbindung mit einem drehfreien Saugkopf 11 vorhanden, welcher drehfrei saugdicht koaxial auf dem Schaft 7 gelagert ist. Der Bohrkopf 8 ist exzentrisch um den Versatz X zur Werkzeugachse A angeordnet. Die Bohrkopfspitze 12 ist als Pilotspitze mit einer einzelnen, rückversetzten Hauptschneide 13 zum Bohren eines Bohrloches 14 mit einem Durchmesser D grösser als der Bohrkopfdurchmesser B ausgebildet.

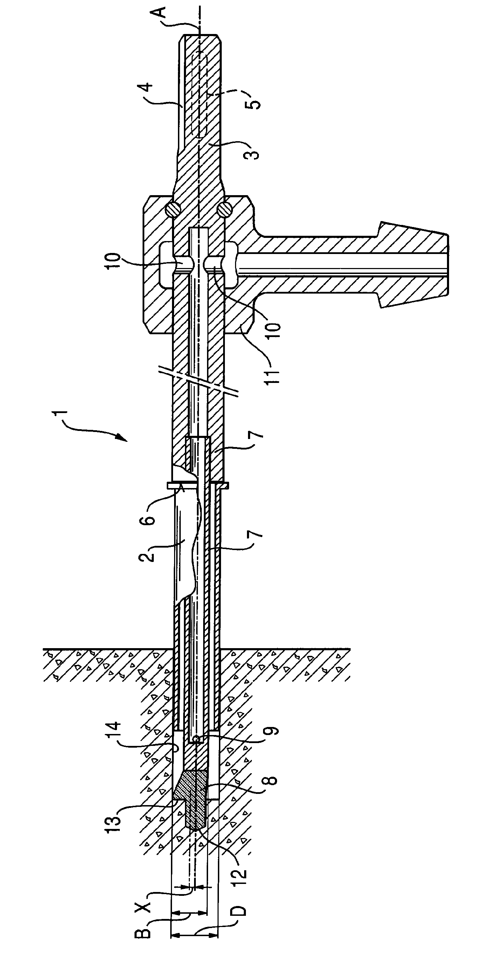

## Patentansprüche

1. Saugbohrer für die Montage eines Bohrdübels (2) in Gestein, Beton, Mauerwerk und dgl. Materialien mit einem Einsteckende (3) zur Aufnahme in ein zumindest teilweise drehendes und schlagendes Handwerkzeuggerät, mit einem gestuft verjüngt abgesetzten Schaft (7) mit einer zumindest teilweise längs des Schaftes (7) verlaufenden, zu einem Bohrkopf (8) hin offenen, Saugöffnung (9) und einer damit verbundenen radialen Verbindungsöffnung (10) zur saugdichten Verbindung mit einem drehfreien Saugkopf (11), **dadurch gekennzeichnet, dass** der Bohrkopf (8) mit einer exzentrisch angeordneten Bohrkopfspitze (12) zum Bohren eines Bohrloches (14) mit einem Bohrlochdurchmesser (D) grösser als der Bohrkopfdurchmesser (B) ausgebildet ist.

2. Saugbohrer nach Anspruch 1, **dadurch gekennzeichnet, dass** die Saugöffnung (9) im verjüngt abgesetztem Schaft (7) entgegen der Bohrerrichtung knapp hinter dem Bohrkopf (8) quer zur Werkzeugachse (A) heraustritt.

3. Saugbohrer nach Anspruch 1 oder Anspruch 2, **dadurch gekennzeichnet, dass** der Bohrkopf (8) vollständig aus Hartstoff oder mit zumindest einem Einsatz aus Hartstoff ausgebildet ist.

4. Saugbohrer nach einem der vorherigen Ansprüche, **dadurch gekennzeichnet, dass** der Bohrkopf (8) eine rückversetzte Hauptschneide (13) aufweist.

5. Saugbohrer nach Anspruch 4, **dadurch gekennzeichnet, dass** genau eine einzelne, rückversetzte Hauptschneide (13) vorhanden ist.
